# EUROPEAN PATENT SPECIFICATION

(11) **EP 1 082 207 B1**
(45) Date of publication and mention of the grant of the patent: **02.04.2003**
(21) Application number: 98923617.9
(22) Date of filing: 22.05.1998
(51) Int. Cl.: B29D 30/52, B29C 43/24, B29C 43/26

(54) **A METHOD AND APPARATUS FOR FORMING TIRE COMPONENTS**
VERFAHREN UND VORRICHTUNG ZUR HERSTELLUNG VON REIFENBESTANDTEILEN
PROCEDE ET APPAREIL DE MISE EN FORME DE COMPOSANTS POUR PNEUMATIQUES

(43) Date of publication of application: 14.03.2001
(73) Proprietor: THE GOODYEAR TIRE & RUBBER COMPANY, Akron, Ohio 44316-0001 (US)
(72) Inventor: BENZING, James, Alfred, II, North Canton, OH 44720 (US); HEAD, William, James, Ravenna, OH 44266 (US); VANNAN, Frederick, Forbes, Clinton, OH 44216 (US)
(74) Representative: Leitz, Paul
(86) International application number: US9810396
(87) International publication number: WO99061230

(56) References cited:
- EP-A- 0 740 999
- GB-A- 528 335
- GB-A- 580 838
- GB-A- 2 084 506
- US-A- 1 690 514
- US-A- 5 030 079

## Description

### Technical Field

This invention relates to methods and apparatuses for forming elastomeric components and more specifically to methods and apparatuses for forming tire components.

### Background of the Invention

Many components of a tire are produced on extruders. The primary function of an extruder is to warm, plasticize and shape mixed rubber to a desired profile.

The extruder is composed of a feedbox, a screw inside a barrel, and a head which holds a die plate. Some extruders also have inserts or flow channels which guide the rubber from the screw to the die opening. The die opening has a shape similar to the desired profile of the rubber extrudate.

The process flow of rubber through an extruder begins with mixed slab or strip rubber entering the feedbox. The rubber is pulled by the flights of the rotating screw into the void area between the screw and the barrel. The rubber is transported along the screw and compressed by the rotating screw in the head. When the hydraulic pressure of the rubber is high enough, rubber is pushed through the die opening forming an extrudate with approximately the profile of the die opening.

In order to facilitate smooth flow of rubber through the die opening, a "take-away belt" is used to pull the extrudate away from the die. Generally the take-away belt stretches the extrudate between 2% and 10%. This situation causes stresses in the rubber extrudate and creates a tendency for it to shrink. The shrinkage can result in unwanted non-uniformities in the finished tires.

The phenomenon of "die swell" occurs as the extrudate exits the die and expands to a larger cross-sectional area. All extruders embody some percentage of die swell which can contribute to unwanted tire non-uniformities.

An extrudate can be composed of more than one rubber compound. Extrudates with two different compounds are made with duplex extruders having two barrels with each barrel having a screw inside. The two barrels are generally bolted to a common head that holds a die. Inserts or splice bars and flow channels are used to control the location of the interface between the two different rubber compounds. This interface is called the "split".

Three compound extrudates are made with a triplex extruder having three barrels with a screw inside each barrel. Similarly, four compound extrudates are made with a quadruplex having four barrels and screws. Any number of compound extrudates can be made with extruders having the same number of barrels and screws.

Using complex flow channels, it is possible to make more than one extrudate simultaneously from the same die plate with more die openings. It is common to extrude two, three, or four extrudates simultaneously.

Some extruders have one or two driven rollers forming part or all of the die opening. This type of extruder is called a roller or dual roller nose extruder.

In order to extrude a uniform rubber part, the extrudate must be of sufficient strength at elevated temperatures to not stretch excessively (less than 10%) or not to pull apart.

US-A- 5 762 740 discloses forming a strip of unvulcanized rubber with a desired profile utilizing "hot forming" technology. Described are the formation and preassembly of carcass components of a tire normally formed by an extruder or contour calender.

GB-A- 580 838 describes the formation of a tire component using a calender assembly station, rubber material delivery means, a pair of calender rollers having a nip therebetween and stock separators.

### Summary of the Invention

This invention relates a method of forming a tire component using a series of calender assembly stations, a tire component formed by this method and a tire including such component as defined in the appended claims.

This invention includes multiple rubber compounds being formed on the same hot forming calender station and the ability to form and preassemble a full range of viscosities and adhesive qualities of rubber polymers. This new technology permits liquid rubbers to be shaped and preassembled to other components. This technology allows one liquid or semi-liquid rubber to be painted onto another much like a paint roller. This new technology makes possible the use of very soft and/or "tacky" rubbers previously unprocessable with extruders or contour calenders.

The use of "plows" 320 or adjustable dividers between the smooth and contoured calender rolls 350, 352 permits the splits or interfaces between compounds to be precisely positioned at the desired location. The flexibility of the hot-forming system allows the optimum processing conditions to be attained for different types of rubber polymers.

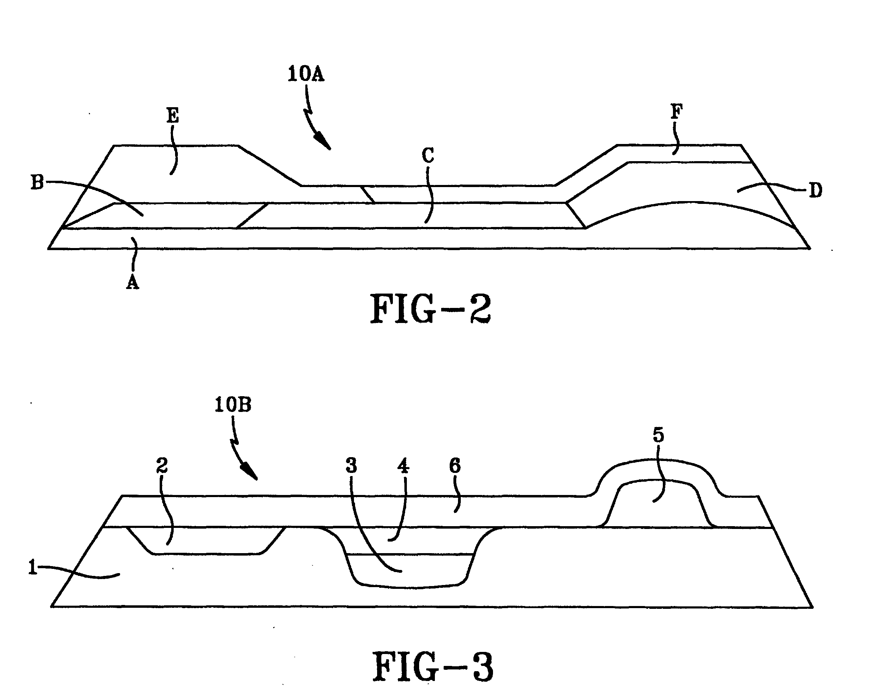

With reference to FIGURE 2, the use of this technology to form the tread component 10A of a tire can be used as an example. Although the overall cross-section profile in FIGURE 2 is symmetrical, the individual compound profiles are asymmetric.

There is no limitation to the number or shapes of zones of different compounds possible with this technology. The dimensional control for each compound zone as well as the total component is significantly better that with known extrusion technology.

### Brief Descriptions of the Drawings

FIGURE 1 illustrates a perspective view of one embodiment of the apparatus 200 of this invention.
FIGURE 2 is a cross-sectional view of a tire tread 10A that can be made by the apparatus 200 of this invention.
FIGURE 3 is a cross-sectional view of a tire sidewall 10B that can be made by the apparatus 200 of this invention.
FIGURE 4 is a top view of one calender 302, a portion of the calender 302 being shown in cross section.
FIGURE 5 is a perspective view of the calender 302 showing the forming depressions 356 on the roller 350.

### Definitions

"Axial" and "axially" means lines or directions that are parallel to the axis of rotation of the tire.

"Carcass" means an unvulcanized laminate of tire ply material and other tire components cut to length suitable for splicing, or already spliced, into a cylindrical or toroidal shape. Additional components may be added to the carcass prior to its being vulcanized to create the molded tire.

"Casing" means the tire carcass and associated tire components excluding the tread.

"Circumferential" means lines or directions extending along the perimeter of the surface of the annular tread perpendicular to the axial direction.

"Equatorial Plane (EP)" means the plane perpendicular to the tire's axis of rotation and passing through the center of its tread.

"Lateral" means an axial direction.

"Radially" and "radially" means directions radially toward or away from the axis of rotation of the tire.

"Radial Ply Tire" means a belted or circumferentially-restricted pneumatic tire in which the ply cords which extend from bead to bead are laid at cord angles between 65° and 90° with respect to the equatorial plane of the tire.

"Sidewall" means that portion of a tire between the tread and the bead.

"Tread" means a rubber or elastomeric component which when bonded to a tire carcass includes that portion of the tire that comes into contact with the road when the tire is normally inflated and under normal load.

### Detailed Description of the Preferred Embodiment

This invention relates to forming a strip of unvulcanized rubber with a desired profile utilizing "hot forming" technology previously disclosed in US-A- 5 762 740, titled, A METHOD AND APPARATUS FOR BUILDING A LAMINATE AND FORMING A CARCASS SUBASSEMBLY FOR A TIRE. The referenced patent application covered formation and preassembly of carcass components of a tire normally formed by an extruder or contour calender.

This invention goes well beyond the referenced disclosure to include multiple rubber compounds being formed on the same hot forming calender station and the ability to form and preassemble a full range of viscosity's and adhesive qualities of rubber polymers. This new technology permits liquid rubbers to be shaped and preassembled to other components. This technology allows one liquid or semi-liquid rubber to be painted onto another much like a paint roller. This new technology makes possible the use of very soft andlor "tacky" rubbers previously unprocessable with extruders or contour calenders.

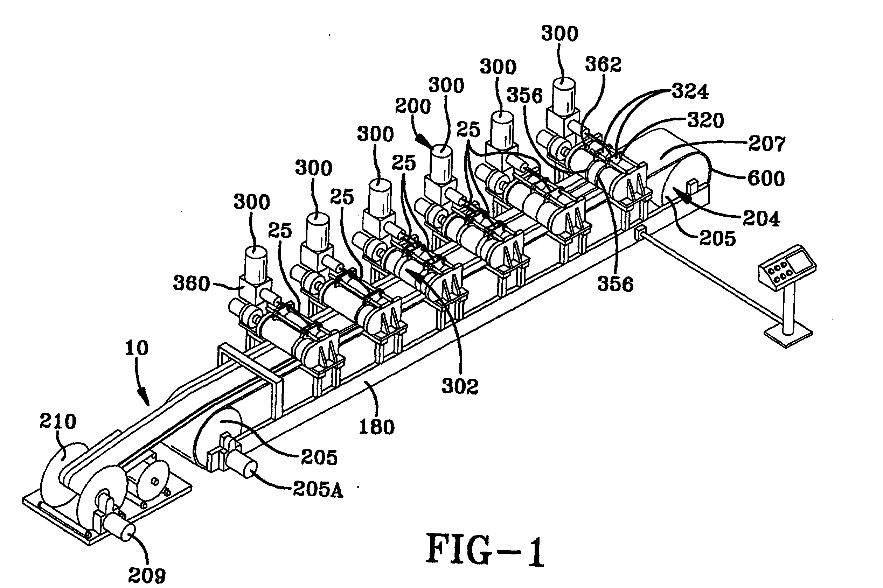

Referring to FIGURE 1, there is illustrated an exemplary use of the apparatus 200 for forming elastomeric strips 10 suitable for use in a pneumatic tire. The apparatus 200 and the alternative methods of using the apparatus 200 are disclosed after a discussion of the elastomeric strips 10.

In one embodiment of the invention, shown in FIGURE 2, the elastomeric strip 10A is a tire tread (given the reference numeral 10A) formed of various compounds. Although the over all cross-section profile in FIGURE 2 is symmetrical, the individual compound profiles are asymmetric. Of course it is not required for this invention that the individual compound profiles be asymmetric. Compound A could be a low hysteresis, highly adhesive base compound. Compound B could be low hysteresis, good heat dissipating compound suited for the inboard side of the tire. Compound C could be specially designed for the center of the footprint. Compound D could be specially suited for the outboard side of the tire. Compounds E and F could be abrasion restraint for long tread wear and tractive for wet and dry pavement. In short, these compounds A, B, C, D, E and F can be formed in varying sizes, shapes and colors and may have viscosities, adhesive qualities and other performance characteristics as desired. This provides great design flexibility for tire designers.

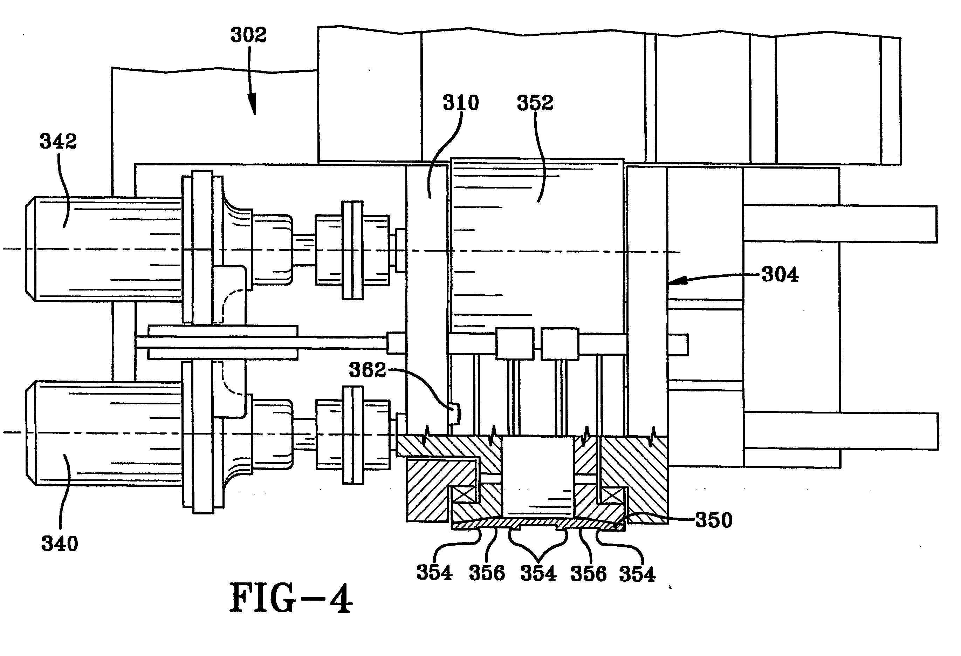

In another embodiment of the invention, shown in FIGURE 3, the elastomeric strip 10 is a tire sidewall (given the reference numeral 10B) also formed of various compounds. Once again these various compounds 1, 2, 3, 4, 5, 6 can be formed in varying sizes, shapes and colors and may have viscosities, adhesive qualities and other performance characteristics as desired.

It should be noted that all the compounds are formed into components that are strips of material of substantially the same length. Each compound, shown in FIGURES 2-3, is precisely located laterally relative to one another.

The elastomeric strip(s) 10 when manufactured as shown in FIGURE 1, can be made into continuous rolls 210. The elastomeric strip(s) 10 is then, it its preassembled state, stored in large rolls 210 which when sent to a tire building station is cut into section of a precise length. The large roll 210, as shown, is driven by a motor 209 to facilitate winding the elastomeric strip 10 onto the roll 210.

Having described the elastomeric strip 10, attention is now referred to FIGURE 1 for a description of the unique apparatus 200 used to form the elastomeric strip 10. The apparatus 200 includes calender assembly stations 300 and conveying means 204 that may include a conveyer belt 207. The calender assembly 300 applies an elastomeric strip 10 to a previously formed elastomeric strip 10 already applied to the conveying means 204. In this way, a tire component (such as tread 10A shown in FIGURE 2) is formed with vertically stacked strips. It should be noted that each vertical strip 10 (that may include multiple laterally adjacent distinct compounds) requires a separate calender assembly station 300. Thus, the tread 10A of FIGURE 2, requires three separate calender assembly stations 300. One station 10 would form the base, made of Compound A. The next vertical strip or row (including the three Compounds B, C, D) can all be formed on a second calender assembly station 300. Similarly, the top strip (including Compounds E and F) can be formed on a third calender assembly station 300.

The conveying means 204 may have two large rotating drums 205 attached to a rigid frame 180. Wrapped over the drums 205 is the conveyer belt 207 that is preferably inextensible and made of stainless steel material. The output end of the apparatus 200 has the rotation drum 205 driven by a variable speed motor 205A. The conveying means 204 is moved at a predetermined speed past the calender assembly station(s) 300. Under the conveyor belt 207 is a means 600 for laterally positioning and guiding the conveyor belt 207.

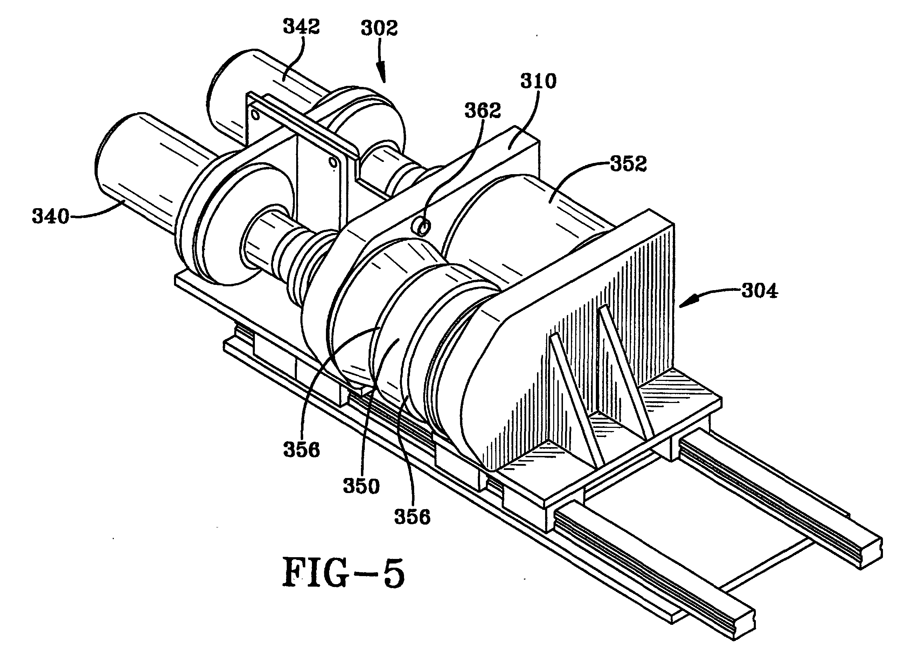

The calender assembly station 300 is used either alone or with other calender assembly station(s) 300 to form the elastomeric strip(s) 10 as noted above. The strips 10, used as tire components, each have a predetermined cross section formed, as shown in FIGURE 5, by at least one forming depression 356 machined into one of the colander rollers 350, 352.

With reference to FIGURE 4, a detailed view of a calender assembly 302 is shown. Each calender assembly 302 is fundamentally the same as the next or adjacent one with the exception of the pair of calender rollers 350, 352. Each calender assembly 302 includes a delivery means 360 for delivering (or feeding) processed elastomeric material 25 to the nip 354 of the two calender rollers 350, 352, the nip 354 being between the two calender rollers. The delivery means 360, as shown, is an extruder 360. Each calender assembly 300 includes at least one extruder 360 but may include multiple extruders 360. For example, to form the middle row of tread 10A shown in FIGURE 2, three extruders 360 would be used, one feeding Compound A, the second feeding Compound B and the third feeding Compound C. On the other hand, a single extruder 360 could feed a single calender assembly with two streams of material 25 carried to two different forming depressions 356 in one of the colander rollers 350, 352. It should be noted that the use of extruders 360 without the need for an extruder head means that the elastomeric strips 10 can be formed at much lower temperatures than used in current technology. In order for the extruder 360 to function automatically, a means 362 for sensing and metering the flow of extrudate 25 to the calenders must be provided.

With reference again to FIGURE 1, the calender assembly 302 includes lateral positioning means 320 (also known as separating means 320) for laterally positioning (and separating when more than one compound is used) the processed elastomeric material 25 at a predetermined lateral location above the calender rollers 350, 352. The preferred lateral positioning means 320 is called plows 320. At least one pair of plows 320 is laterally positioned at a predetermined location radially above the pair of calender rollers 350, 352. Each plow 320 has two rigid members 324 contoured to precisely fit above and between the two rollers. The plow rigid member 324 may be placed laterally adjacent to a lateral end of a forming depression 356 located on one or both of the calender rollers 350, 352. It should be noted, however, that plows 320 may also be located in the midst of a forming depression 356. In this case, when a first compound is fed from one side of the plow 320 and a second compound is fed from the other side of the plow 320, as the first and second compounds pass through the nip 354 beyond the plow 320, the first and second compounds are laterally joined prior to being removed from the rollers. Thus, the use of plows 320 (or adjustable dividers) between the smooth and contoured calender rolls 350, 352 permits the splits or interfaces between compounds to be precisely positioned at the desired location. The plows 320 also secure and provide lateral support while preventing an overflow of calendered material from forming and adhering to the conveying means 204.

The lateral position of the component forming depressions 356, are precisely located relative to the conveyor belt 207. This ensures that each component as it is formed is aligned and affixed with respect to the conveying means 204 and with respect to any previously formed and attached components. The precise lateral positioning ensures that each component is properly located and enables minimal material variation to be achieved while also reducing the relative size of each component due to tolerance variations that occurred in the prior art method of assembly.

As shown in FIGURE 4, each calender assembly 302 has two calender rollers 350, 352, one roller being the transfer roller 350, the other being the follower roller 352. Each calender assembly 302 includes means 304 for supporting the rollers. Each calender assembly 302 has at least one, preferably two motors 340, 342.

The flexibility of the above hot-forming method allows the optimum processing conditions to be attained for different types of rubber polymers. There is no limitation to the number or shapes of zones of different compounds possible with this technology. The dimensional control for each compound zone as well as the total component is significantly better that with known extrusion technology.

## Claims

1. A method of forming a tire component, using a series of calender assembly stations (300) wherein single or multiple compounds may be formed on a same calender assembly station, whereby lateral positioning means (320) are used for precisely positioning the interfaces between the compounds at the desired location, including the steps of:
providing a calender assembly station (300) including delivery means (360) for delivering processed elastomer material (25), calender rollers (350,352) having an associated nip (354) therebetween and lateral positioning means (320) for laterally positioning the processed elastomeric material at predetermined lateral locations;
utilizing the delivery means to feed a first stream of processed elastomeric material into the nip;
utilizing the delivery means to feed a second stream of processed elastomeric material into the nip, wherein the second stream is laterally separated from the first stream by the lateral positioning means (320), wherein as the first and second streams pass through the nip beyond the lateral positioning means, the first and second streams are laterally joined prior to being removed from the calender rollers (350,352) to obtain a strip (10) of elastomeric material;
**characterized by**
providing one of a pair of calender rollers (352) with at least one forming depression (356);
forming the first stream in a first portion of the forming depression;
forming the second stream in a second portion of the forming depression
wherein the processed elastomeric material of the first and second streams is laterally positioned at the predetermined lateral locations above the pair of calender rollers;
forming possibly a third and more streams, in a third and further portion of said forming depression, using lateral positioning means (320) for precisely positioning the interfaces between compounds at the desired location above the pair of calender rollers;
conveying the so formed strip (10) from said calender assembly station to a further calender assembly station;
forming a further strip of elastomeric material at the further assembly station; and
applying the further strip onto the conveyed strip.

2. The method of claim 1 wherein strips including multiple laterally adjacent distinct compounds, are formed in separate calender assembly stations (300).

3. The method of claim 2, wherein the tire component is a tire tread (10A).

4. The method of claim 3, wherein a first calender assembly station forms the base (A), a second calender assembly station the middle strip (B,C,D) and a third assembly station the top strip (E,F).

5. The method of claim 1 wherein the tire component is a tire sidewall (10B).

6. The method of claim 1, wherein the elastomeric materials are formed in varying sizes, shapes, colours, viscosities and adhesive qualities.

7. The method of claim 1, wherein one of the calender rollers (350,352) is provided with two different forming depressions (356).

8. A tire component formed by the method of claim 1 **characterized in that** first and second streams of a first strip (10) of elastomeric material are laterally adjacent distinct elastomeric compounds and **in that** said first and a further strip are vertically stacked.

9. The tire component of claim 8 having a symmetrical cross-sectional profile and wherein at least one of the first or second portions has an asymmetrical cross-sectional profile.

10. A tire including the component of claim 8.

## Patentansprüche

1. Verfahren zum Herstellen einer Reifen-Komponente unter Verwendung einer Reihe von Kalanderaufbaustationen (300), an denen eine einzelne Masse oder mehrere Massen an einer gleichen Kalanderaufbaustation gebildet werden können, wobei Seitenpositionierungsmittel (320) zum präzisen Positionieren der Grenzflächen zwischen den Massen an dem gewünschten Ort benutzt werden, mit den Schritten:
dass eine Kalanderaufbaustation (300) geschaffen wird, welche Zuliefermittel (360) zum Zuliefern von bearbeitetem Elastomermaterial (25), Kalanderwalzen (350, 352), die einen zugeordneten Spalt (354) dazwischen aufweisen, und Seitenpositionierungsmittel (320) zum seitlichen Positionieren des verarbeiteten elastomeren Materials an vorgegebenen seitlichen Orten umfasst;
dass die Zuliefermittel zum Zuführen eines ersten Stromes von verarbeitetem Elastomermaterial in den Spalt benutzt werden; dass die Zuliefermittel zum Zuführen eines zweiten Stromes von verarbeitetem Elastomermaterial in den Spalt benutzt werden, wobei der zweite Strom von dem ersten Strom durch das Seitenpositionierungsmittel (320) seitlich getrennt ist, wobei dann, wenn der erste und der zweite Strom durch den Spalt hindurch über das Seitenpositionierungsmittel hinaus gelangen, der erste und der zweite Strom seitlich vereinigt werden, bevor sie von den Kalanderwalzen (350, 352) abgenommen werden, um einen Streifen (10) aus Elastomermaterial zu erhalten;
**dadurch gekennzeichnet,**
**dass** eine von einem Paar Kalanderwalzen (352) mit mindestens einer Formungsvertiefung (356) versehen wird;
**dass** der erste Strom in einem ersten Abschnitt der Formungsvertiefung gebildet wird;
**dass** der zweite Strom in einem zweiten Abschnitt der Formungsvertiefung gebildet wird, wobei das verarbeitete Elastomermaterial des ersten und des zweiten Stroms seitlich an den vorgegebenen seitlichen Orten über dem Paar Kalanderwalzen positioniert wird; möglicherweise ein dritter und weitere Ströme in einem dritten und in weiteren Abschnitten der Formungsvertiefung unter Verwendung von Seitenpositionierungsmitteln (320) zum genauen Positionieren der Grenzflächen zwischen den Massen an dem gewünschten Ort über dem Paar Kalanderwalzen gebildet werden;
**dass** der so gebildete Streifen (10) von der Kalanderaufbaustation zu einer weiteren Kalanderaufbaustation gefördert wird;
**dass** ein weiterer Streifen aus Elastomermaterial an der weiteren Zusammenbaustation gebildet wird; und
**dass** der weitere Streifen auf den geförderten Streifen aufgelegt wird.

2. Verfahren nach Anspruch 1, bei dem mehrfache seitlich benachbarte bestimmte Massen enthaltende Streifen in separaten Kalanderaufbaustationen (300) gebildet werden.

3. Verfahren nach Anspruch 2, bei dem die Reifenkomponente ein Reifen-Laufstreifen (10A) ist.

4. Verfahren nach Anspruch 3, bei dem eine erste Kalanderaufbaustation das Grundteil (A), eine zweite Kalanderaufbaustation den mittleren Streifen (B, C, D) und eine dritte Anlegestation den oberen Streifen (E, F) bildet.

5. Verfahren nach Anspruch 1, bei dem die Reifenkomponente eine Reifenseitenwand (10B) ist.

6. Verfahren nach Anspruch 1, bei dem die Elastomermaterialien in verschiedenen Größen, Formen, Farben, Viskositäten und Klebequalitäten gebildet werden.

7. Verfahren nach Anspruch 1 bei dem eine der Kalanderwalzen (350, 352) mit zwei unterschiedlichen Formungsvertiefungen (356) versehen ist.

8. Reifenkomponente, die durch das Verfahren von Anspruch 1 gebildet ist, **dadurch gekennzeichnet, dass** erste und zweite Ströme eines ersten Streifens (10) aus Elastomermaterial seitlich benachbarte unterschiedliche elastomere Massen sind, und dass der erste und ein weiterer Streifen vertikal gegeneinander versetzt sind.

9. Reifenkomponente nach Anspruch 8 mit einem symmetrischen Querschnittsprofil, bei dem mindestens einer der ersten oder zweiten Abschnitte ein asymmetrisches Querschnittsprofil aufweist.

10. Reifen, der die Komponente nach Anspruch 8 enthält.

## Revendications

1. Procédé de formation d'un composant de bandage pneumatique, dans lequel on utilise une série de postes d'assemblage de calandres (300) dans lequel on peut former des composés uniques ou multiples sur un même poste d'assemblage de calandre, par lequel on utilise des moyens de positionnement latéral (320) pour positionner avec précision les interfaces entre les composés à l'endroit désiré, englobant les étapes consistant à :
procurer un poste d'assemblage de calandre (300) englobant un moyen de distribution (360) pour distribuer une matière élastomère (25) qui a été traitée, des rouleaux de calandre (350, 352) qui comportent un écartement de pincement associé (354) disposé entre eux et un moyen de positionnement latéral (320) pour positionner en direction latérale la matière élastomère qui a été traitée, à des endroits latéraux prédéterminés ;
utiliser le moyen de distribution pour alimenter un premier courant d'une matière élastomère qui a été traitée, dans l'écartement de pincement ;
utiliser le moyen de distribution pour alimenter un deuxième courant d'une matière élastomère qui a été traitée, dans l'écartement de pincement, dans lequel le deuxième courant est séparé en direction latérale du premier courant par le moyen de positionnement latéral 320, dans lequel lorsque les premier et deuxième courants passent à travers l'écartement de pincement au-delà du moyen de positionnement latéral, les premier et deuxième courants sont joints latéralement avant d'être retirés des rouleaux de calandre (350, 352) dans le but d'obtenir un ruban (10) d'une matière élastomère
**caractérisé par** le fait de
procurer une paire de rouleaux de calandre (352) comprenant au moins une dépression de façonnement (356);
former le premier courant dans une première portion de la dépression de façonnement ;
former le deuxième courant dans une deuxième portion de la dépression de façonnement, par lequel la matière élastomère qui a été traitée, constituée par les premier et deuxième courants, est positionnée latéralement aux endroits latéraux prédéterminés au-dessus de la paire des rouleaux de calandre ;
former le cas échéant un troisième courant et plus, dans une troisième portion et plus de ladite dépression de formation en utilisant des moyens de positionnement latéral (320) pour positionner avec précision les interfaces entre des composés à l'endroit désiré au-dessus de la paire de rouleaux de calandre ;
transporter le ruban (10) ainsi obtenu depuis ledit poste d'assemblage de calandre jusqu'à un poste d'assemblage de calandre suivant ;
former un ruban supplémentaire de matière élastomère au poste d'assemblage suivant ; et
appliquer le ruban supplémentaire sur le ruban transporté.

2. Procédé selon la revendication 1, dans lequel des rubans englobant de multiples composés distincts disposés en position latéralement adjacente sont formés dans des postes séparés d'assemblage de calandres (300).

3. Procédé selon la revendication 2, dans lequel le composant de bandage pneumatique est une bande de roulement de bandage pneumatique (10A).

4. Procédé selon la revendication 3, dans lequel un premier poste d'assemblage de calandre forme la base (A), un deuxième poste d'assemblage de calandre forme le ruban médian (B, C, D) et un troisième poste d'assemblage de calandre forme le ruban supérieur (E, F).

5. Procédé selon la revendication 1, dans lequel le composant de bandage pneumatique est un flanc de bandage pneumatique (10B).

6. Procédé selon la revendication 1, dans lequel les matières élastomères sont formées avec des dimensions, des configurations, des couleurs, des viscosités et des qualités adhésives qui varient.

7. Procédé selon la revendication 1, dans lequel un des rouleaux de calandre (350, 352) est muni de deux dépressions de façonnement différentes (356).

8. Composant de bandage pneumatique réalisé via le procédé selon la revendication 1, **caractérisé en ce que** des premier et deuxième courants d'un premier ruban (10) de matière élastomère représentent des composés élastomères distincts adjacents en position latérale et **en ce que** ledit premier ruban et un ruban supplémentaire sont empilés à la verticale.

9. Composant de bandage pneumatique selon la revendication 8, possédant un profil symétrique en coupe transversale, et dans lequel au moins une des première et deuxième portion possède un profil asymétrique en coupe transversale.

10. Bandage pneumatique englobant le composant selon la revendication 8.
